# EUROPEAN PATENT APPLICATION

(11) **EP 1 990 727 A1**
(43) Date of publication of application: **12.11.2008**
(21) Application number: 06714755.3
(22) Date of filing: 27.02.2006
(51) Int. Cl.: G06F 12/08

(54) **CACHE CONTROL APPARATUS AND CACHE CONTROL PROGRAM**

(71) Applicant: FUJITSU LIMITED, Kawasaki-shi, Kanagawa 211-88 (JP)
(72) Inventor: MARUYAMA, Masaharu c/o FUJITSU LIMITED,, Kawasaki-shi, Kanagawa;2118588 (JP); MOTOKURUMADA, Tsuyoshi c/o FUJITSU LIMITED,, Kawasaki-shi, Kanagawa,2118588 (JP)
(74) Representative: Stebbing, Timothy Charles
(86) International application number: PCT/JP2006/303618
(87) International publication number: WO 2007/097026

(57) **Abstract**

A cache control device 10 includes an access control unit 20 that controls an access to a cache memory, a main memory unit 40 that stores various types of data, a cache memory 25 that stores frequently used data and has a plurality of ways, a monitoring register 30 that stores cache line degeneration information which indicates that a specific cache line of cache lines forming a plurality of ways is degenerated, and an error counter 35 that counts the number of errors that occur in response to an access request to the cache memory 25 in total regardless of in which way the error occurs.

## Description

### TECHNICAL FIELD

The present invention relates to a cache control device and a cache control program which control a cache memory having a plurality of ways based on an access request.

### BACKGROUND ART

Conventionally, due to the miniaturization of semiconductor technology, and consequently the miniaturization of a memory device constituting a RAM (for example, a cache memory) installed in a processor, a reversal of memory information has become increasingly likely to happen. Further, as an internal circuit of a RAM has less and less margin for an adjusted value of an internal operation timing to improve the operating frequency, the operable voltage and temperature are limited, whereby a RAM is less and less resistant to voltage fluctuations and temperature fluctuations. As a result of the above, a rate of error occurrence has increased and the error is likely to occur in a specific bit position of the RAM.

In view of the above, technologies for detecting errors and performing degeneration control of a cache line (i.e. control that disables a part of a data storage area) are disclosed. For example, a technology disclosed in Patent Document 1 (Japanese Patent Application Laid-Open No. H4-243446) provides an error counter that counts and registers a number of errors occur in each way that indicates a column position inside a cache memory, and degenerates a way when the number of errors in the way reaches a predetermined threshold value to avoid damage from the errors.

Further, a technology disclosed in Patent Document 2 (Japanese Patent Application Laid-Open No. H10-334695) provides an error counter that counts and registers the number of errors occur in each cache line that indicates a row position inside a cache memory, and degenerates a cache line when the number of errors in the cache line reaches a predetermined threshold value.

Patent Document 1: Japanese Patent Application Laid-Open No. H4-243446
Patent Document 2: Japanese Patent Application Laid-Open No. H10-334695

### DISCLOSURE OF INVENTION

### PROBLEM TO BE SOLVED BY THE INVENTION

In Patent Document 1 above, since an entire way including a cache line where an error occurs is controlled to be degenerated, many of cache lines working properly are wastefully controlled to be degenerated. Further, as an error counter is needed for each way, an area required to avoid damage from errors is large.

Further, in Patent Document 2 above, since an error counter is needed for each cache line constituting the way (a cache line is a minimum unit of a data storage area inside the cache), an area required to avoid damage from errors is large, similarly to Patent Document 1.

In view of the above, the present invention is made in order to solve the problems of conventional technologies described above, and an object of the present invention is to provide a cache control device and a cache control program capable of minimizing an influence of error occurrence and minimizing an area required for a countermeasure against errors.

### MEANS FOR SOLVING PROBLEM

In order to solve the above mentioned problems and achieve an object of the present invention, the claimed invention according to claim 1 is a cache control device which controls a cache memory having a plurality of ways based on an access request, and includes an error number count memory unit that counts in total a number of errors that occur in response to the access request regardless of in which way the error occurs, a degeneration information memory unit that stores cache line degeneration information which indicates that a specific cache line of cache lines forming the plurality of ways is degenerated, a degeneration information writing unit that writes, when the number of error occurrences counted by the error number count memory unit reaches a predetermined upper limit number, with respect to a cache line where an error occurs to cause the number to reach the predetermined upper limit number, the cache line degeneration information which indicates that the cache line is degenerated into the degeneration information memory unit, and a replace control unit that performs, in response to a replace request to the cache line corresponding to the cache line degeneration information, a replace control to exclude the cache line from replace candidates.

Further, in the invention according to claim 2, in an aspect of the present invention above, the degeneration information writing unit further writes, when the number of error occurrences counted by the error number count unit reaches a predetermined upper limit number and sequentially reaches another predetermined upper limit number, which is larger than the predetermined upper limit number, with respect to an entire way including a cache line where an error occurs to cause the number to reach the predetermined upper limit number, way degeneration information which indicates that a way is degenerated in the degeneration information memory unit, and the replace control unit performs, in response to a replace request to the way corresponding to the way degeneration information stored in the degeneration information memory unit, a replace control to exclude the way from replace request candidates.

Further, the invention according to claim 3, in an aspect of the present invention above, the cache control device further includes a degeneration information deleting unit that deletes, if cache line degeneration information is stored for a specific way in the degeneration information memory unit when the way degeneration information is further written into the degeneration information memory unit by the degeneration information writing unit so as to make all the ways of the plurality of ways except the specific way are degenerated, the cache line degeneration information from the degeneration information memory unit.

Further, the invention according to claim 5, in an aspect of the present invention above, the degeneration information writing unit, in receiving specific test data, writes into the degeneration information memory unit cache line degeneration information which indicates that a specific cache line specified with the reception of the test data is degenerated.

Further, the claimed invention according to claim 5, in an aspect of the present invention above, is a cache control program that makes a computer perform a control of a cache memory having a plurality of ways based on an access request, and the cache control program making a computer perform an error number count memory unit that counts in total a number of errors that occur in response to the access request regardless of in which way the error occurs; a degeneration information memory unit that stores cache line degeneration information which indicates that a specific cache line of cache lines forming the plurality of ways is degenerated, a degeneration information writing process that writes, when the number of error occurrences counted by the error number count memory unit reaches a predetermined upper limit number, with respect to a cache line where an error occurs to cause the number to reach the predetermined upper limit number, the cache line degeneration information which indicates that a cache line is degenerated into the degeneration information memory unit; and a replace control process that performs, in response to a replace request to the cache line corresponding to the cache line degeneration information stored in the degeneration information memory unit, a replace control to exclude the cache line from replace candidates.

### EFFECT OF THE INVENTION

According to the invention according to claim 1 or 5, the cache control device which controls the cache memory having a plurality of ways based on the access request, counts the number of errors that occur in response to the access request in total regardless of in which way the error occurs, and stores cache line degeneration information which indicates that a specific cache line of cache lines forming the plurality of ways is degenerated. Further, when the number of error occurrences counted reaches the predetermined upper limit number, with respect to the cache line related to the error which causes the number to reach the predetermined upper limit number, the cache control device writes the cache line degeneration information indicating that the cache line is degenerated, in the degeneration information memory unit, and performs, in response to the replace request to the cache line corresponding to the stored cache line degeneration information, the replace control to exclude the cache line from replace candidates. Therefore, the cache control device can minimize an influence of error occurrence by disabling (i.e. degenerating) only the cache line where the error occurs, and can minimize an area required for countermeasure against errors by counting all errors in the cache memory (for example, counting in total regardless of which way and cache line the error occurs) in one area (for example, an error counter).

Further, according to the invention according to claim 2, when the counted number of error occurrences reaches the predetermined upper limit number and sequentially reaches the another predetermined upper limit number, which is larger than the predetermined upper limit number, with respect to the entire way including the cache line related to the error which causes the number to reach the predetermined upper limit number, the cache control device writes way degeneration information which indicates that the way is degenerated, in the degeneration information memory unit and performs, in response to the replace request to the way corresponding to the stored way degeneration information, the replace control to exclude the way from replace candidates. Therefore, the cache control device can keep the cache memory reliable by degenerating the entire way including a cache line where an error frequently occurs.

Further, according to the invention according to claim 3, when the way degeneration information is further written into the degeneration information memory unit, so that all the ways of the plurality of ways except one specific way are degenerated and when cache line degeneration information of the specific way is stored in the degeneration information memory unit, the cache line degeneration information is deleted from the degeneration information memory unit. Therefore, for example, even when all ways in the cache memory are to be degenerated, the cache control device does not disable the cache memory but releases a usable way and cache lines. As a result, the cache control device can maintain the function of the cache memory.

Further according to the invention according to claim 4, in receiving specific test data, the cache control device writes into the degeneration information memory unit, cache line degeneration information which indicates that a specific cache line specified with the reception of the test data is degenerated. Therefore, for example, a degeneration operation of a cache and a way can be tested with the use of test data before product shipment. As a result, the quality of a variety of products including the cache control device can be enhanced.

### BRIEF DESCRIPTION OF DRAWINGS

[FIG. 1] FIG. 1 is a system block diagram of an overall configuration of a cache control device according to a first embodiment.
[FIG. 2] FIG. 2 is a flowchart of cache control processes according to the first embodiment.
[FIG. 3] FIG. 3 is a diagram showing an example of a circuit configuration of the cache control device according to the first embodiment.

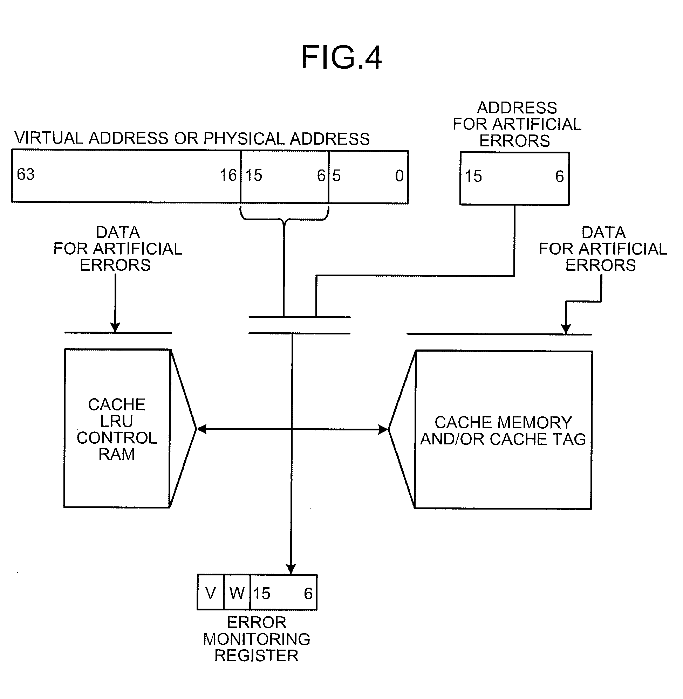

[FIG. 4] FIG. 4 is a diagram showing a case where test data of the cache control device according to a second embodiment is employed.
[FIG. 5] FIG. 5 is a diagram of a computer system which executes a cache control program.

### EXPLANATIONS OF LETTERS OR NUMERALS

- 10: Cache control device
- 20: Access control unit
- 20a: Error detection unit
- 20b: Cache search unit
- 20c: Degeneration information writing unit
- 20d: Replace control unit
- 25: Cache memory
- 30: Monitoring register
- 35: Error counter
- 40: Main memory unit
- 50: Computer system
- 51: RAM
- 52: HDD
- 52a: Error number count memory table
- 52b: Degeneration information memory table
- 53: ROM
- 53a: Error detection program
- 53b: Cache search program
- 53c: Degeneration information writing program
- 53d: Replace control program
- 54: CPU
- 54a: Error detection process
- 54b: Cache search process
- 54c: Degeneration information writing process
- 54d: Replace control process
- 55: Main memory

### BEST MODE(S) FOR CARRYING OUT THE INVENTION

Embodiments of a cache control device according to the present invention are described below in detail with reference to the accompanying drawings.

### First Embodiment

A first embodiment below describes in turn, a gist and features of the cache control device according to the present invention, a configuration of the cache control device, a processing flow, a circuit configuration, and an effect of the first embodiment, and the like.

### [Gist and Features of Cache Control Device]

Firstly, the gist and features of the cache control device according to the first embodiment are described. The gist of a cache control device 10 according to the first embodiment lies in that the cache control device 10 controls a cache memory having a plurality of ways (i.e. lines in a cache) based on an incidence of error occurred in response to an access request (for example, a reading request and a writing request) to a cache memory 25. In particular, a main feature thereof lies in that the cache control device 10 can minimize an influence of error occurrence and an area required for a countermeasure against errors. More specifically, the cache control device 10 can minimize an influence of error occurrence by disabling (i.e. degenerating) only the cache line where the error occurs, and can minimize an area required for a countermeasure against errors by counting all errors in the cache memory (for example, counting in total regardless of which way and cache line the error occur) in one area (for example, an error counter).

### [Configuration of Cache Control Device (First Embodiment)]

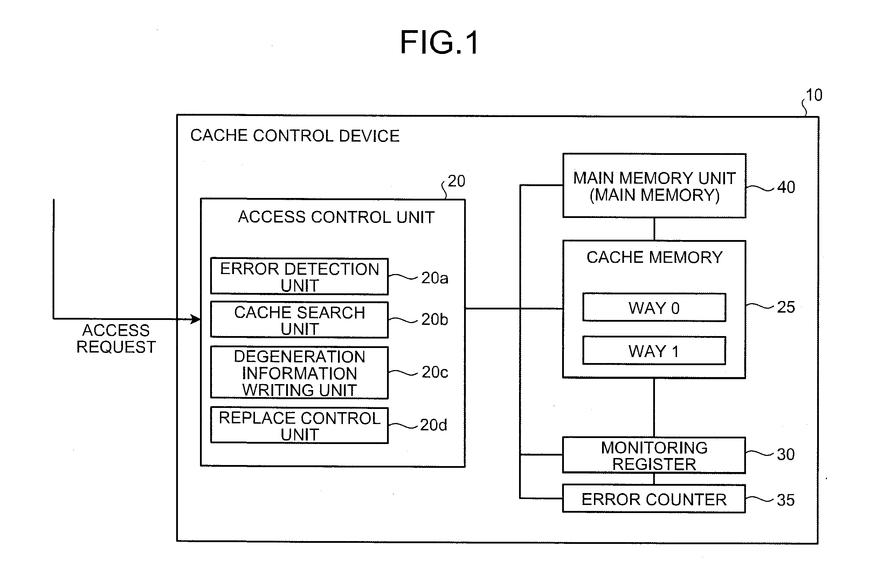

Next, an overall configuration of a system including the cache control device is described with reference to FIG. 1. FIG. 1 is a block diagram of an overall configuration of the system including the cache control device. The cache control device 10 includes an access control unit 20, a main memory unit 40, a cache memory 25, a monitoring register 30, and an error counter 35. The monitoring register 30 corresponds to "degeneration information memory unit" recited in claims and similarly, the error counter 35 corresponds to "error number count memory unit" therein.

In the configuration, the main memory unit 40 is a storage unit (i.e. memory unit) that stores data and a program required for various processes. Specifically, the main memory unit 40 stores, for example, data required for various processes performed by a CPU and the like, data requested by an access request, and the like.

The cache memory 25 is configured with a plurality of ways and is a memory unit which stores frequently used data of data stored in the main memory unit 40. To give a specific example, the cache memory 25 adopts an N-way set associative scheme and includes a "way 0" and a "way 1" as shown in FIG. 1.

Further, the error counter 35 is a unit that counts a number of errors that occur in response to an access request to the cache memory 25 in total regardless of in which way the error occurs. To give a specific example, the error counter 35 stores the number of errors that occur in the "way 0" and the "way 1" in the cache memory 25.

The monitoring register 30 is a unit that stores cache line degeneration information indicating that a specific cache line of cache lines forming a plurality of ways is degenerated. To give a specific example, when an error occurs in a cache line of one of the "way 0" and the "way 1" in the cache memory 25, the monitoring register 30 stores cache line degeneration information (for example, way 0, cache line address A, and the like).

The access control unit 20 is a unit that controls an access to the cache memory 25 and performs degeneration control of cache lines and ways. Particularly, as units in close relation to the present invention, the access control unit 20 includes an error detection unit 20a, a cache search unit 20b, a degeneration information writing unit 20c, and a replace control unit 20d. Here, the degeneration information writing unit 20c corresponds to "degeneration information writing unit" recited in claims and similarly, the replace control unit 20d corresponds to "replace control unit" therein.

In the configuration, the error detection unit 20a is a unit that detects an error in the cache memory 25. To be specific, when there is an access request (for example, data readout request) to the cache memory 25, the error detection unit 20a detects whether an error occurs in the cache lines in the accessed cache memory 25.

Further, the cache search unit 20b is a unit that searches, in response to an access request, the cache memory 25 for a requested data. To give a specific example, in response to an access request (for example, data readout request), the cache search unit 20b searches the cache memory 25 for the requested data and reads out the data from the cache memory 25 if the data is found in the cache memory 25. On the other hand, if the data is not found in the cache memory 25, the cache search unit 20b reads out the data from the main memory unit 40, and sends a replace request to the replace control unit 20d described later.

The degeneration information writing unit 20c is a unit that writes, when the number of error occurrences counted by the error counter 35 reaches a predetermined upper limit number, the cache line degeneration information, which indicates that the cache line is degenerated in the monitoring register with respect to a cache line where an error that causes the number to reach the upper limit number occurs. To be specific, when an access request sent for the cache memory 25 leads to a detection of an error, and with which the number reaches the predetermined upper limit number, the degeneration information writing unit 20c writes into the monitoring register 30, information of the cache line (for example, way 0 and cache line address A) related with this error.

To give an example, when the error detection unit 20a detects an error in response to an access request to the cache memory 25, and with this error, the number of errors in the error counter 35 is incremented by one, reaching the predetermined upper limit number (for example, 8), then the degeneration information writing unit 20c writes into the monitoring register 30 information of the cache line (for example, way 0 and cache line address A) related with this error.

The replace control unit 20d is a unit that performs, in response to a replace request to a cache line corresponding to the cache line degeneration information stored in the monitoring register 30, a replace control to exclude the cache line from replace candidates. To give a specific example, in response to a replace request to a cache line (for example, the way 0 and the cache line address 0) corresponding to cache line degeneration information (for example, way 0 and cache line address 0) stored in the monitoring register 30, the replace control unit 20d performs a replace control to exclude the cache line from replace candidates and to prevent the registration to the way including this cache line.

### [Processes of the Cache Control Device]

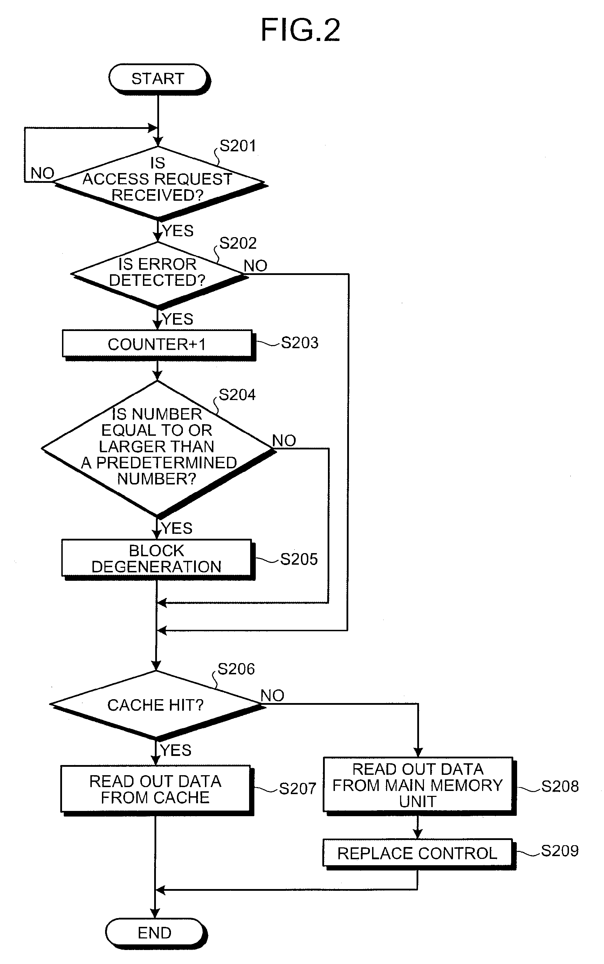

Next, processes of the cache control device are described below with reference to FIG. 2. FIG. 2 is a flowchart of a flow of cache control processes. As shown in the figure, if the cache control device 10 receives an access (Step S201 Yes), the error detection unit 20a detects whether the error occurs or not (Step S202).

If an error is detected (Step S202 Yes), a number count (i.e. counter) of the error counter 35 is incremented by one (Step S203). Then, the cache control device 10 determines whether the number count counted by the error counter 35 is smaller than a predetermined number or not (Step S204). On the other hand, if an error is not detected (Step S202 No), the cache control device 10 proceeds to perform a process at Step S206 described later.

Then, if the number count is larger than or equal to the predetermined number (Step S204 Yes), the cache control device 10 writes into the monitoring register 30, cache line degeneration information which indicates that the cache line is degenerated, with respect to a cache line where an error occurs to cause the number count to reach the predetermined number, and block-degenerates (i.e. disables) the cache line (Step S205). On the other hand, if the number count is smaller than the predetermined number (Step S204 No), the cache control device 10 proceeds to perform a process at Step S206 described later.

Then, the cache search unit 20b determines whether the data requested by the access request is present in the cache memory 25 (i.e. cache hit) or not (Step S206).

Then, if a cache hit occurs (Step S206 Yes), the cache search unit 20b reads out the data from the cache memory 25 (Step S207).

On the other hand, if a cache hit does not occur (Step S206 No), the cache search unit 20b reads out the data from the main memory unit 40 (Step S208). Subsequently, the replace control unit 20d registers the readout data in a cache line of the cache memory 25 (Step S208).

### [Circuit Configuration of the Cache Control Device]

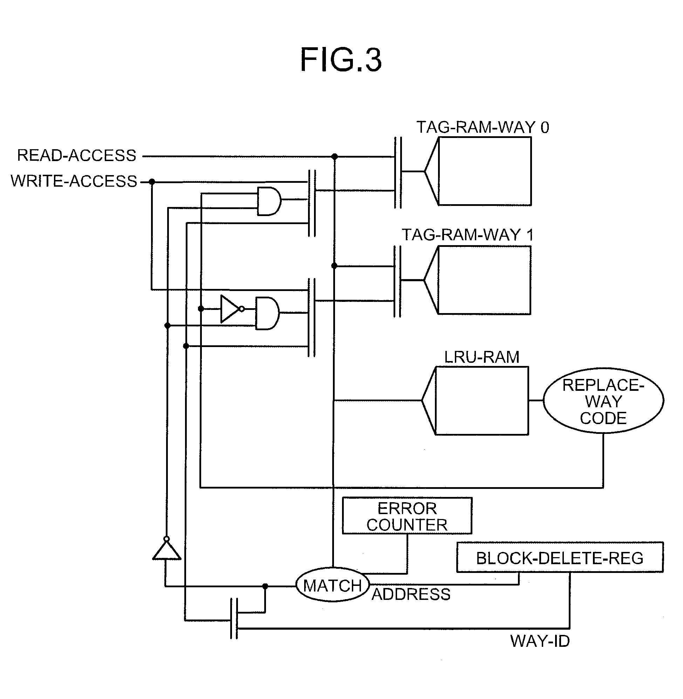

Next, a circuit configuration of the cache control device 10 shown in FIG. 1 is described below with reference to FIG. 3. FIG. 3 is a diagram showing an example of a circuit configuration of the cache control device 10.

As shown in FIG. 3, a TAG-RAM-WAYO and a TAG-RAM-WAY1 are ways adopting an N-way set associative scheme and forming a cache memory, and store frequently used data of data stored in the main memory unit (i.e. main memory).

When a replace request to a monitored cache line (a cache line registered in a BLOCK-DELETE-REGISTER) is received, a LRU-RAM performs a replace control to exclude the cache line from replace candidates. Further, when data is written into a cache memory while the cache line is degenerated, the LRU-RAM performs a control to ensure that a monitored cache line registered in the BLOCK-DELETE-REGISTER is not to be replaced. For the purpose above, when a monitored cache line address is accessed, the LRU-RAM performs a control to ensure that a way other than a way with a monitored number is selected for replace.

Further, the error counter counts the number of errors that occur in the TAG-RAM-WAYO and the TAG-RAM-WAY1 in total regardless of in which way an error occurs.

Further, a BLOCK-DELETE-STATE not shown in the figure is a FLAG indicating that a cache line is in the cache line degeneration process. To be specific, when an error is detected in the cache memory, the error counter counts the number. Further, when all WAY-DELETE-FLAGS (i.e. FLAG indicating that the way is in way degeneration) are set in the state of 0, and an error detection number of the cache memory/cache tag exceeds a threshold value, the signal is enabled and held until all MIBS are released (waiting for a Move-in process to finish).

Further, a BLOCK-DELETE-FLAG not shown in the figure is a FLAG indicating that a cache line is in degeneration. To be specific, when the BLOCK-DELETE-STATE is enabled and all MIBS are disabled, the BLOCK-DELETE-FLAG is enabled and then the cache line degeneration is enabled. Further, when the BLOCK-DELETE-FLAG is enabled, the BLOCK-DELETE-STATE is disabled.

Further, a BLOCK-DELETE-REGISTER stores cache line degeneration information which indicates that a specific cache line of cache lines forming the TAG-RAM-WAY0 or the TAG-RAM-WAY1 is degenerated. To be specific, the BLOCK-DELETE-REGISTER holds a cache line address used as an index of the cache line and a cache way number registered in the cache, and in every detection of an error of a cache memory or a cache tag, the BLOCK-DELETE-REGISTER registers the cache line address and the way number. When an error is detected in a plurality of cache lines, at every detection of error, the registered content changes. Alternatively, in order to change a control according to a frequency of error detections in the cache memory, the BLOCK-DELETE-REGISTER may be enabled when the number count in the error counter reaches a predetermined number.

### [Effect of the First Embodiment]

As described above, the present invention according to the first embodiment is a cache control device that controls a cache memory having a plurality of ways, counts the number of errors that occur in response to an access request in total regardless of in which way the error occurs, stores cache line degeneration information which indicates that a specific cache line of cache lines forming a plurality of ways is degenerated, writes, when the number of errors counted reaches a predetermined upper limit number, cache line degeneration information which indicates that the cache line is degenerated with respect to a cache line where an error that causes the number to reach the predetermined upper limit number occurs, and performs, in response to a replace request to the cache line corresponding to the cache line degeneration information, a replace control to exclude the cache line from replace candidates. Therefore, the cache control device can minimize an influence of error occurrence by disabling (i.e. degenerating) only the cache line where the error occurs, and can minimize an area required for a countermeasure against errors by counting all errors in cache memory (for example, counting in total regardless of which way and cache line) in one area (for example, an error counter).

### Second Embodiment

Although the above description so far has related with the cache control device according to the first embodiment, the present invention can be embodied in various forms other than the first embodiment described above. Therefore, various forms are described below as a second embodiment.

### (1) Way Degeneration

For example, although a cache line degeneration control is described in the first embodiment described above, the present invention is not limited to the described embodiment. When an error frequently occurs, the entire way may be degenerated.

To be specific, when the number of error occurrences counted by the error counter 35 reaches a predetermined upper limit number (for example, 8) and later another predetermined upper limit number (for example, 15), which is larger than the predetermined upper limit number (for example, larger than 8), the degeneration information writing unit 20c shown in FIG. 1 writes into a monitoring register 30, way degeneration information (for example, way 0) which indicates that the way is degenerated with respect to the entire way (for example, way 0) including a cache line (for example, way 0, cache address B) related with an error which causes the number to reach the other predetermined upper limit number (for example, 15). Further, in response to a replace request for the way corresponding to the way degeneration information stored in the monitoring register 30, the replace control unit 20d performs a replace control to exclude the way from replace request candidates.

Thus a way including a cache line frequently causing an error may be degenerated as the entire way, whereby a cache memory can be kept reliable.

### (2) Cache Line Degeneration Disablement

When all ways of a plurality of ways forming a cache memory are degenerated, degeneration on a way that is way degenerated may be released. To be specific, when the degeneration information writing unit 20c further writes way degeneration information into the monitoring register 30, all other ways of a plurality of ways except one specific way are degenerated. If cache line degeneration information of the specific way is stored in the monitoring register 30, the cache line degeneration information is deleted from the monitoring register 30.

For example, in a cache memory including a way 0 and a way 1, when a way with a different way number from a number indicated by the monitoring register 30 is way degenerated (for example, when a cache line in the way 0 is registered in the monitoring register 30 and unavailable, and the way 1 is way degenerated for some reason), keeping cache line degeneration enabled could make some cache lines unavailable. For this reason, the cache line degeneration information is deleted from the monitoring register 30.

Therefore, even when all ways forming a cache memory are to be degenerated, the cache control device does not disable the cache memory but releases a usable way and cache lines. As a result, the cache control device can maintain the function of the cache memory.

### (3) Degeneration Control with Test Data

The degeneration control may be tested with test data. To be specific, by replacing an address (6 to 15 bits) to be read out from a cache memory with previously prepared fake (test) address, reading out the fake (test) data previously stored in the cache memory, and executing processes described in the first embodiment or the second embodiment, it may be checked whether the degeneration control works properly or not.

Thus, a degeneration operation of a cache and a way can be tested with the use of test data before product shipment. As a result, the quality of a variety of products including the cache control device can be enhanced.

### (4) Device Configuration and Others

In the processes (see FIG. 2) of the cache control device described in the first embodiment and the second embodiment, all or some part of the processes described as automatically performed processes may be also performed manually. Also, all or some part of the processes described as manually performed processes may be performed automatically with a known method. Besides, an operation procedure, a control procedure, a specific name, and information including a variety of data and parameters (for example, error counter and the like) described in this specification and the accompanying drawings may be arbitrarily altered if not otherwise specified.

Further, each configuration element of the cache control device shown in FIG. 1 and the circuit configuration of the cache control device shown in FIG. 3 represents just a concept of the function, and thus a cache control device does not necessarily require the same physical configuration shown in the figures. Specifically, a manner of division/integration of each element is not limited to that shown in figures, for example, the degeneration information writing unit 20c and the replace control unit 20d may be divided or integrated. Depending on various types of loads and use conditions, all or some part of the configuration may be divided/integrated functionally or physically on any unit basis. Further, all or some part of each process of the cache control device may be achieved by a CPU and a program analyzed and executed by the CPU, or may be achieved as hardware based on wired logic.

### (5) Cache Control Program

Further, various processes described in the above embodiment may be achieved through an execution of a previously prepared program on a computer system such as a personal computer, and a work station. Here, an example of a computer system that executes a program with the similar function as the above embodiment is described below.

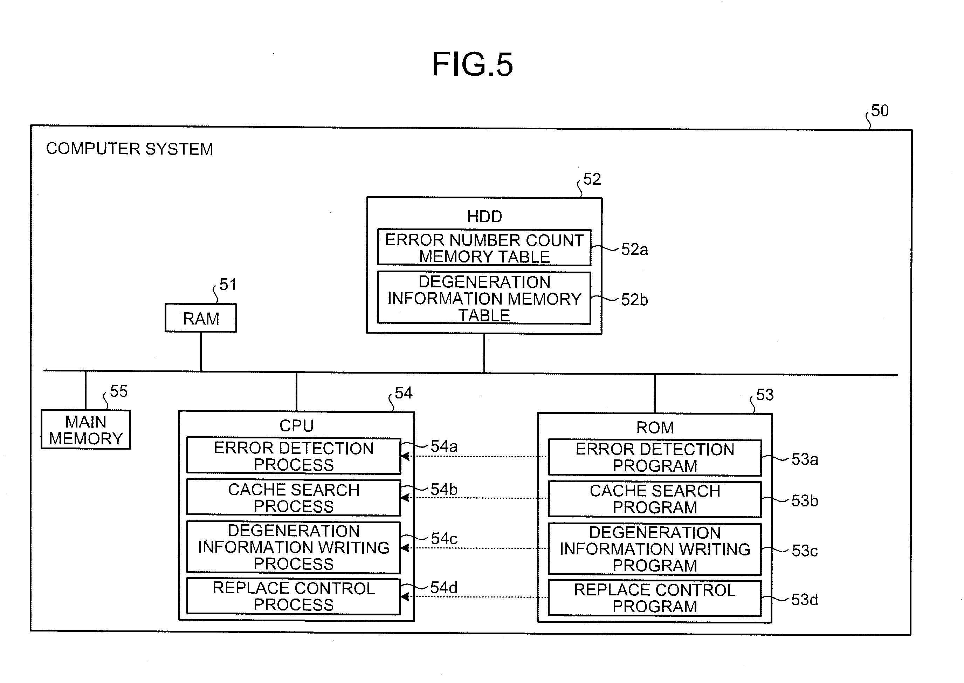

FIG. 5 is a diagram of a computer system 50 that executes a cache control program. As shown in the figure, the computer system 50 includes a RAM 51, a HDD 52, a ROM 53, a CPU 54, and a main memory 55. Here, the ROM 53 has programs exerting the similar function as the above embodiments. As shown in FIG. 5, the ROM 53 has an error detection program 53a, a cache search program 53b, a degeneration information writing program 53c, and a replace control program 53d previously stored therein.

The CPU 54 reads out and executes the programs 53a to 53d and then, as shown in FIG. 5, the respective programs function as an error detection process 54a, a cache search process 54b, a degeneration information writing process 54c, and a replace control process 54d. Here, the processes 54a to 54d correspond respectively to the error detection unit 20a, the cache search unit 20b, the degeneration control writing unit 20c, and the replace control unit 20d shown in FIG. 1.

Further, the HDD 52 has an error number count memory table 52a that counts the number of errors occur in response to an access request in total regardless of in which way the error occurs, and a degeneration information memory table 52b that stores cache line degeneration information which indicates that a specific cache line of cache lines forming a plurality of ways is degenerated. Here, the error number count memory table 52a and the degeneration information memory table 52b correspond respectively to the error counter 35 and the monitoring register 30 shown in FIG. 1.

In addition, the above described programs 53a to 53d are not necessarily be stored in the ROM 53, and may be stored, for example, in "a portable physical medium" inserted into the computer system 50, such as a flexible disk (FD), a CD-ROM, an MO disk, a DVD disk, a magnetooptical disk, an IC card, or in "a fixed physical medium" such as a hard disk drive (HDD) arranged inside/outside the computer system 50. Further, the programs 53a to 53d may be stored in "another computer system" that is connected to the computer system 50 via a public line, the Internet, LAN, or WAN. Thus, the computer system 50 can read out the programs therefrom and execute the same.

### INDUSTRIAL APPLICABILITY

As described above, a cache control device and a cache control program according to the present invention are useful for controlling a cache memory having a plurality of ways based on an access request, and particularly suitable for allowing minimization of the influence of error occurrences and minimization of an area required for a countermeasure against errors.

## Claims

1. A cache control device which controls a cache memory having a plurality of ways based on an access request, comprising:
an error number count memory unit that counts in total a number of errors that occur in response to the access request regardless of in which way the error occurs;
a degeneration information memory unit that stores cache line degeneration information which indicates that a specific cache line of cache lines forming the plurality of ways is degenerated;
a degeneration information writing unit that writes, when the number of error occurrences counted by the error number count memory unit reaches a predetermined upper limit number, with respect to a cache line where an error occurs to cause the number to reach the predetermined upper limit number, the cache line degeneration information which indicates that a cache line is degenerated into the degeneration information memory unit; and
a replace control unit that performs, in response to a replace request to the cache line corresponding to the cache line degeneration information stored in the degeneration information memory unit, a replace control to exclude the cache line from replace candidates.

2. The cache control device according to claim 1, wherein
the degeneration information writing unit further writes, when the number of error occurrences counted by the error number count unit reaches a predetermined upper limit number and sequentially reaches another predetermined upper limit number, which is larger than the predetermined upper limit number, with respect to an entire way including a cache line where an error occurs to cause the number to reach the predetermined upper limit number, way degeneration information which indicates that a way is degenerated in the degeneration information memory unit, and
the replace control unit performs, in response to a replace request to the way corresponding to the way degeneration information stored in the degeneration information memory unit, a replace control to exclude the way from replace request candidates.

3. The cache control device according to claim 2, further comprises a degeneration information deleting unit that deletes, if cache line degeneration information is stored for a specific way in the degeneration information memory unit when the way degeneration information is further written into the degeneration information memory unit by the degeneration information writing unit so as to make all the ways of the plurality of ways except the specific way are degenerated, the cache line degeneration information from the degeneration information memory unit.

4. The cache control device according to claim 1, wherein the degeneration information writing unit, in receiving specific test data, writes into the degeneration information memory unit cache line degeneration information which indicates that a specific cache line specified with the reception of the test data is degenerated.

5. A cache control program that makes a computer perform a control of a cache memory having a plurality of ways based on an access request, the cache control program making a computer perform:
an error number count memory unit that counts in total a number of errors that occur in response to the access request regardless of in which way the error occurs;
a degeneration information memory unit that stores cache line degeneration information which indicates that a specific cache line of cache lines forming the plurality of ways is degenerated;
a degeneration information writing process that writes, when the number of error occurrences counted by the error number count memory unit reaches a predetermined upper limit number, with respect to a cache line where an error occurs to cause the number to reach the predetermined upper limit number, the cache line degeneration information which indicates that a cache line is degenerated into the degeneration information memory unit; and
a replace control process that performs, in response to a replace request to the cache line corresponding to the cache line degeneration information stored in the degeneration information memory unit, a replace control to exclude the cache line from replace candidates.
